# EUROPEAN PATENT APPLICATION

(11) **EP 4 589 715 A1**
(43) Date of publication of application: **23.07.2025**
(21) Application number: 23865812.4
(22) Date of filing: 11.09.2023
(51) Int. Cl.: H01M 10/0587, H01M 50/533, H01M 4/02

(54) **ELECTRODE ASSEMBLY**

(30) Priority: 16.09.2022 KR 20220117482
(71) Applicant: LG Energy Solution, Ltd., Seoul 07335 (KR)
(72) Inventor: LEE, Byoung Kook, Daejeon 34122 (KR); KIM, Byung Sup, Daejeon 34122 (KR); KIM, Hyoung Kwon, Daejeon 34122 (KR)
(74) Representative: Goddar, Heinz J.
(86) International application number: PCT/KR2023/013587
(87) International publication number: WO 2024/058515

(57) **Abstract**

The present invention provides an electrode assembly having a structure, in which a negative electrode, a separator, and a positive electrode are wound in a stacked state, and a middle center hole, the electrode assembly including: a negative electrode wound in a state a negative electrode tab is bonded to a predetermined position; and a positive electrode having an inner end that is closer to the center hole and an outer end that is farther from the center hole as an opposite end of the inner end, wherein the negative electrode, the separator, and the positive electrode are wound so that an inner end of the negative electrode is disposed closer to the center hole than the inner end of the positive electrode, and when a virtual line is drawn from the inner end of the positive electrode to a center point of the center hole, the virtual line passes through the negative electrode tab.

## Description

### TECHNICAL FIELD

### CROSS-REFERENCE TO RELATED APPLICATION

The present application claims the benefit of the priority of Korean Patent Application No. 10-2022-0117482, filed on September 16, 2022, which is hereby incorporated by reference in its entirety.

### TECHNICAL FIELD

The present invention relates to an electrode assembly having a winding-type structure, and more particularly, to an electrode assembly that is provided to solve a problem of short circuit occurring due to damage of a negative electrode and a separator due to expansion of a positive electrode and releasing of a separator exposed to an inner circumferential surface at a center hole.

### BACKGROUND ART

Batteries storing electrical energy may be generally classified into primary batteries and a secondary batteries. Such a primary battery is a disposable consumable battery. On the other hand, such a secondary battery is a chargeable battery that is manufactured by using a material in which oxidation and reduction processes between current and the material are capable of being repeated.

That is, when the reduction reaction to the material is performed by the current, power is charged, and when the oxidation reaction to the material is performed by the current, power is discharged. Here, such the charging-discharging are repeatedly performed.

Among various types of secondary batteries, lithium secondary batteries are generally manufactured by mounting an electrode assembly, in which a positive electrode (cathode), a separator, and a negative electrode (anode) are stacked, in a case. Here, as a process, in which lithium ions are intercalated and deintercalated from lithium metal oxide to the negative electrode, is repeated to charge and discharge the lithium secondary batteries.

In the electrode assembly, a plurality of unit cells, each in which a negative electrode, a separator, and a positive electrode, each of which is generally cut to a predetermined size, are stacked in a predetermined order, are stacked, or an individual positive electrode/separator/negative electrode is repeatedly stacked to form one electrode assembly. Also, the electrode assembly is accommodated in a case such as a cylindrical can and a prismatic pouch.

As a method for manufacturing the electrode assembly, a winding type electrode assembly in which the separator is stacked between the negative electrode and the positive electrode and then wound to manufacture an electrode assembly, a stacking type electrode assembly in which each of a negative electrode and a positive electrode is cut by a desired width and length, and then, the negative electrode, the separator, the positive electrode are repeatedly stacked to form an electrode assembly, and a stack and folding type electrode assembly in which unit cells are placed parallel to each other on a folding separator and then folded from one side to manufacture an electrode assembly have been known.

Among these, the winding-type (jell roll-type) electrode assembly is manufactured by fixing a first separator to a core and sequentially inputting a negative electrode, a second separator, and a positive electrode during rotation of the core (in some cases, the order of inputting of the separator, the negative electrode, and the positive electrode may be changed).

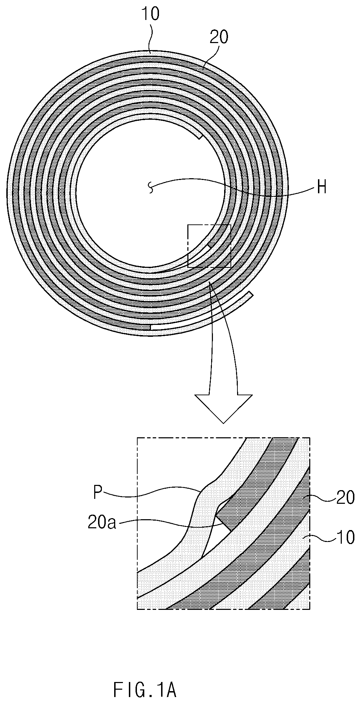

Therefore, as illustrated in FIG. 1a in which the separators are omitted in the electrode assembly according to the related art, and the negative electrode and the positive electrode are wound, in a portion at which an inner end 20a of the positive electrode 20 is disposed, the negative electrode 10 has a bent part P that is a portion bent by a thickness of the positive electrode 20 is disposed.

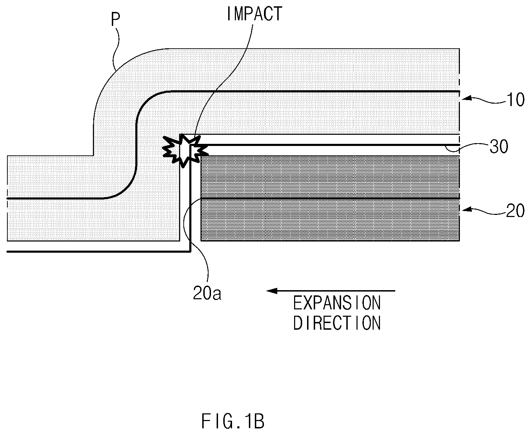

However, as heating and cooling are repeated while the secondary battery is charged and discharged, the negative electrode 10 and the positive electrode 20 wound around the electrode assembly are contracted and expanded. Thus, as illustrated more clearly in FIG. 1b, which illustrates an enlarged view of the portion at which the inner end 20a of the positive electrode 20 is disposed in the electrode assembly according to the related art, the inner end 20a of the positive electrode may press the separator 30 and the bent part P of the negative electrode 10 during the expansion.

Due to this expansion of the positive electrode 20, stress may be concentrated locally into the negative electrode 10 to cause damage, and the separator 30 disposed therebetween may also be damaged to cause short circuit between the positive electrode 20 and the negative electrode 10.

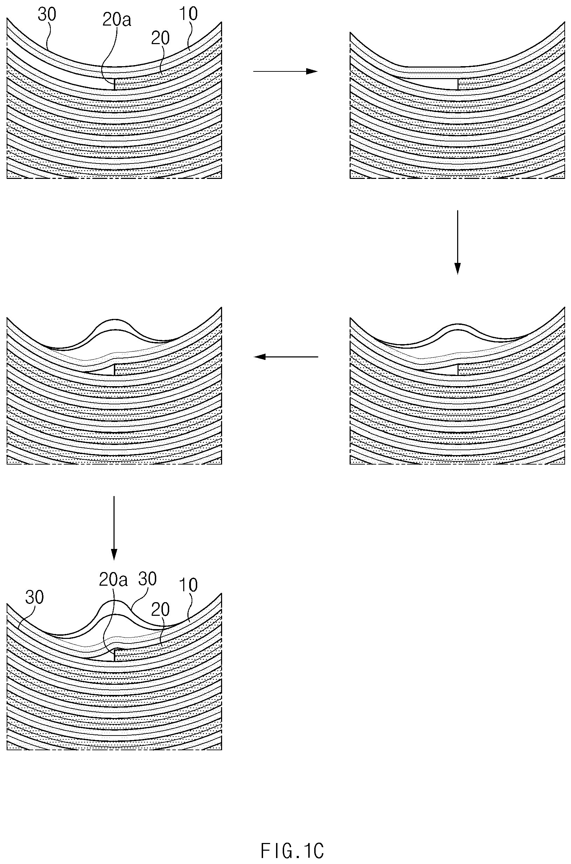

In addition, as illustrated in FIG. 1c, which sequentially illustrates the loosening of the separator 30 as the positive electrode 20 is expanded, the separator 30 may be loosened on an area that is disposed at the innermost side of a center hole H (forming an inner circumferential surface of the center hole), and thus, the negative electrode 10 may be separated.

### DISCLOSURE OF THE INVENTION

### TECHNICAL PROBLEM

Therefore, in order to solve the above conventional problems, a main object of the present invention is to provide an electrode assembly in which, even if a positive electrode is expanded, and its inner end moves, damage of a negative electrode and a separator is prevented or minimized to prevent the separator exposed to a center hole from being loosened.

### TECHNICAL SOLUTION

The present invention for achieving the above object provides an electrode assembly having a structure, in which a negative electrode, a separator, and a positive electrode are wound in a stacked state, and a middle center hole, the electrode assembly including: a negative electrode wound in a state a negative electrode tab is bonded to a predetermined position; and a positive electrode having an inner end that is closer to the center hole and an outer end that is farther from the center hole as an opposite end of the inner end, wherein the negative electrode, the separator, and the positive electrode are wound so that an inner end of the negative electrode is disposed closer to the center hole than the inner end of the positive electrode, and when a virtual line is drawn from the inner end of the positive electrode to a center point of the center hole, the virtual line passes through the negative electrode tab.

The negative electrode tab may include an inner negative electrode tab disposed closer to the center hole than the inner end of the positive electrode, and when a virtual line is drawn from the inner end of the positive electrode to the center point of the center hole, the virtual line may pass through the inner negative electrode tab.

Only a single-layered negative electrode may be disposed between the inner end of the positive electrode and the negative electrode tab.

A recessed groove may be defined in the negative electrode tab so that a surface thereof has a recessed shape on a surface facing the inner end of the positive electrode. The recessed groove may be provided in an arc shape having a predetermined curvature.

the recessed groove has a relatively smaller curvature at a middle portion (has a larger radius of curvature), and each of both sides of the middle portion has a relatively larger curvature (having a smaller radius of curvature).

A bent part that protrudes inward may be disposed on a corresponding area of the negative electrode, on which the inner end of the positive electrode is disposed, and the negative electrode tab may be bonded so that the recessed groove faces the bent part.

A surface of the negative electrode tab, in which the recessed groove is defined, may be provided so that the recessed groove is disposed between a flat first planar portion and a flat second planar portion.

The negative electrode tab may further include an outer negative electrode tab disposed father from the center hole than the outer end of the positive electrode.

The electrode assembly having the above configuration embedded into a case such as a can and provided to the secondary battery.

### ADVANTAGEOUS EFFECTS

In the present invention, which has the technical features described above, the expansion of the inner end of the positive electrode may be absorbed by the negative electrode tab instead of the negative electrode to prevent the negative electrode and the separator from being damaged.

The recessed groove having the shape of which the surface is recessed may be defined in the surface facing the inner end of the positive electrode to more efficiently absorb the expansion of the positive electrode.

### BRIEF DESCRIPTION OF THE DRAWINGS

FIG. 1a is a view illustrating a state in which separators are omitted, and a negative electrode and a positive electrode are wound in an electrode assembly according to a related art.
FIG. 1b is an enlarged view illustrating a portion at which an inner end of the positive electrode is disposed in the electrode assembly according to the related art.
FIG. 1c is a view sequentially illustrating states in which loosening of the separator occurs due to expansion of the positive electrode in the electrode assembly according to the related art.
FIG. 2 is a view illustrating a state in which a negative electrode tab is disposed according to an embodiment of the present invention.
FIG. 3 is a view illustrating a configuration of the negative electrode provided in an embodiment of the present invention.
FIG. 4 is a view illustrating a state (above) before expansion of an inner end of a positive electrode and a state (below) after the expansion of the inner end of the positive electrode.
FIG. 5 is a view a state in which a virtual line passes through an inner negative electrode tab when the virtual line is drawn from the inner end of the positive electrode to a center point of a center hole according to an embodiment of the present invention.

### MODE FOR CARRYING OUT THE INVENTION

Hereinafter, preferred embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein.

In order to clearly describe the present invention, parts irrelevant to the description are omitted, and the same reference numerals are assigned to the same or similar components throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

The present invention relates to an electrode assembly in which, even if a positive electrode 20 is expanded, and its inner end 20a moves, damage of a negative electrode 10 and a separator 30 is prevented or minimized to prevent the separator 30 from being loosened on an area that is exposed to a central hole H, and hereinafter, preferred embodiments of the present invention will be described in more detail with reference to the attached drawings.

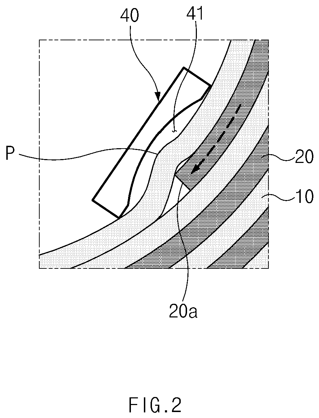

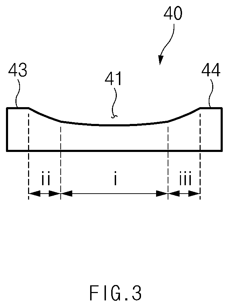

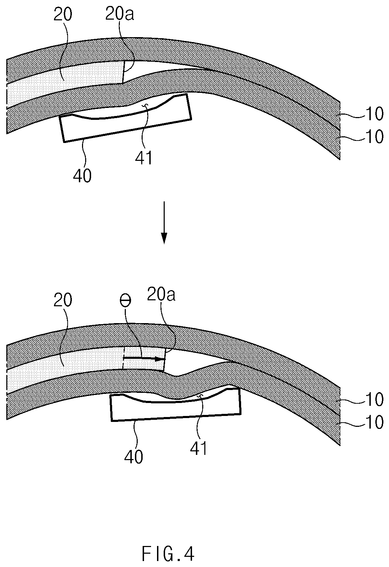

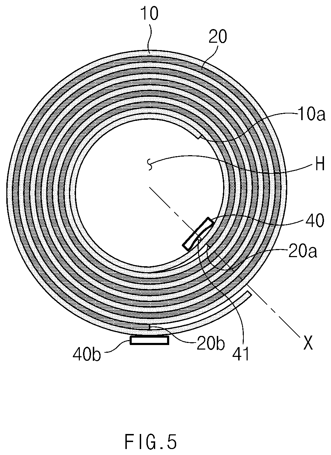

FIG. 2 is a view illustrating a state in which a negative electrode tab is disposed according to an embodiment of the present invention, FIG. 3 is a view illustrating a configuration of the negative electrode provided in an embodiment of the present invention, and FIG. 4 is a view illustrating a state (above) before expansion of an inner end of a positive electrode and a state (below) after the expansion of the inner end of the positive electrode. In addition, FIG. 5 is a view a state in which a virtual line passes through an inner negative electrode tab when the virtual line is drawn from the inner end of the positive electrode to a center point of a center hole according to an embodiment of the present invention.

An electrode assembly according to an embodiment provided by the present invention has a structure in which a negative electrode 10, a separator 30, and a positive electrode 20 are wound in a stacked state, like the structure according to the related art. That is, a winding-type electrode assembly is manufactured by fixing a first separator to a core and sequentially inputting a negative electrode, a second separator, and a positive electrode during rotation of the core (in some cases, the order of inputting of the separator, the negative electrode, and the positive electrode may be changed).

Thus, the electrode assembly provided in an embodiment may have a structure in which the first separator is disposed on an inner circumferential surface of a center hole H, and the first separator, a negative electrode, a second separator, and a positive electrode are wound in a stacked state.

In addition, the negative electrode 10 is wound in a state in which a negative electrode tab 40 is bonded to a predetermined position, and the positive electrode 20 is also wound in a state in which a positive electrode tab (not shown) is bonded, and an inner end 20a that is closer to the center hole H and an outer end 20b that is farther from the center hole H as an opposite end of the inner end 20a are provided.

Thus, as illustrated in FIGS. 2 and 5 (for reference, in FIGS. 2 and 5, the separators are omitted, and only the negative electrode and the positive electrode are illustrated to avoid complication of the drawing with many lines), the negative electrode 10 has a bent part P, which is a portion bent by a thickness of the positive electrode 20, at a portion on which the inner end 20a of the positive electrode 20 is disposed.

When the electrode assembly is manufactured, as described above, the negative electrode 10 is put into a core prior to the positive electrode 20, and thus, the inner end 10a of the negative electrode 10 is disposed to be closer to the center hole H tan the inner end 20a of the positive electrode 20.

In addition, when a virtual line X is drawn from the inner end 20a of the positive electrode 20 to a center point of the center hole H, the negative electrode tab 40 (more specifically, the inner negative electrode tab of the negative electrode tabs) is disposed to pass through the virtual line X.

Here, as illustrated in FIG. 5, the negative electrode tab 40 includes an inner negative electrode tab 40a disposed closer to the center hole H than the inner end 20a of the positive electrode 20 and an outer negative electrode tab (40b) disposed farther from the center hole H than the outer end (20b), and the inner negative electrode tab 40a is configured to pass through the virtual line X.

Only a single-layered negative electrode 10 is disposed between the inner end 20a of the positive electrode 20 and the inner negative electrode tab 40a. For reference, although not shown in FIGS. 2 and 5, it is obvious that the separator 30 is disposed between the positive electrode 20 and the negative electrode 10, and thus, only a single-layered negative electrode and a single-layered separator are disposed between the inner end 20a of the positive electrode and the negative electrode tab 40.

In addition, the negative electrode tab 40 provided in the present invention (the inner negative electrode tab of the inner negative electrode tab and the outer negative electrode tab) has a structure in which a recessed groove 41 is defined as another embodiment.

That is, the recessed groove 41 is defined in the negative electrode tab 40 so that a surface thereof has a recessed shape on a surface facing the inner end 20a of the positive electrode 20.

As illustrated more clearly in FIG. 3, the recessed groove 41 defined in the negative electrode tab 40 is provided in an arc shape having a predetermined curvature.

More specifically, the recessed groove 41 has a relatively smaller curvature at a middle portion (i) (a larger radius of curvature so as to be relatively flat), and each of both sides (ii, iii) of the middle portion (i) has a relatively larger curvature (has a smaller radius of curvature to have a relatively more curved shape).

In addition, the surface of the negative electrode tab 40 in which the recessed groove 41 is defined is provided so that the recessed groove is disposed between a flat first planar portion 43 and a flat second planar portion 44. As the first planar portion 43 and the second planar portion 44 are provided, a welding area of the negative electrode tab 40 may more increase when welded to the negative electrode 10.

As illustrated in FIG. 4, the bent part protruding inward is disposed on a corresponding area of the negative electrode 10 on which the inner end 20a of the positive electrode 20 is disposed, and the negative electrode tab 40 is bonded so that the recessed groove 41 faces the bent part.

When the positive electrode 20 is expanded due to the charging or discharging, etc., the inner end 20a of the positive electrode 20 is slid. Here, depending on a sliding length θ, a position of the bent part moves, and an amount of deformation also increases. Since the behavior of the bent part occurs within the recessed groove 41 defined in the negative electrode tab 40, the deformation of the negative electrode 10 due to the inner end 20a of the positive electrode 20 may be fully accommodated within the negative electrode tab 40. Here, the position of the negative electrode tab 40 may also slightly move due to the expansion of the negative electrode 10, but it may not move to the extent of deviating from the bent part.

Therefore, in the structure of the present invention, the deformation of the negative electrode 10 due to the expansion of the positive electrode 20 is absorbed within the recessed groove 41 of the negative electrode tab 40. Therefore, the amount of deformation of the bent part is limited in size (within a size of the recessed groove), and this deformation is expanded to a surrounding area, i.e., an amount of deformation increases to prevent or minimally suppress the damage of the negative electrode 10 and the separator 30 and the loosening of the separator 30 that defines an inner circumferential surface of the center hole H.

The electrode assembly having the above configuration may be embedded into the case such as a can and provided to the secondary battery.

In the present invention, which has the technical features described above, the expansion of the inner end 20a of the positive electrode may be absorbed by the negative electrode tab 40 instead of the negative electrode 10 to prevent the negative electrode 10 and the separator 30 from being damaged.

The recessed groove having the shape of which the surface is recessed may be defined in the surface facing the inner end of the positive electrode to more efficiently absorb the expansion of the positive electrode.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

10: Negative electrode
10a: Inner end of negative electrode
20: Positive electrode
20a: Inner end of positive electrode
30: Separator
40: Negative electrode tab (40a: Inner negative electrode tab, 40b: Outer negative electrode tab)
H: Center hole
X: Virtual line drawn from inner end of positive electrode to center point of center hole

## Claims

1. An electrode assembly having a structure, in which a negative electrode, a separator, and a positive electrode are wound in a stacked state, and a middle center hole, the electrode assembly comprising:
a negative electrode wound in a state a negative electrode tab is bonded to a predetermined position; and
a positive electrode having an inner end that is closer to the center hole and an outer end that is farther from the center hole as an opposite end of the inner end,
wherein the negative electrode, the separator, and the positive electrode are wound so that an inner end of the negative electrode is disposed closer to the center hole than the inner end of the positive electrode, and
when a virtual line is drawn from the inner end of the positive electrode to a center point of the center hole, the virtual line passes through the negative electrode tab.

2. The electrode assembly of claim 1, wherein the negative electrode tab comprises an inner negative electrode tab disposed closer to the center hole than the inner end of the positive electrode, and
when a virtual line is drawn from the inner end of the positive electrode to the center point of the center hole, the virtual line passes through the inner negative electrode tab.

3. The electrode assembly of claim 1, wherein only a single-layered negative electrode is disposed between the inner end of the positive electrode and the negative electrode tab.

4. The electrode assembly of claim 1, wherein a recessed groove is defined in the negative electrode tab so that a surface thereof has a recessed shape on a surface facing the inner end of the positive electrode.

5. The electrode assembly of claim 4, wherein the recessed groove is provided in an arc shape having a predetermined curvature.

6. The electrode assembly of claim 5, wherein the recessed groove has a relatively smaller curvature at a middle portion, and each of both sides of the middle portion has a relatively larger curvature.

7. The electrode assembly of claim 4, wherein a bent part that protrudes inward is disposed on a corresponding area of the negative electrode, on which the inner end of the positive electrode is disposed, and the negative electrode tab is bonded so that the recessed groove faces the bent part.

8. The electrode assembly of claim 4, wherein a surface of the negative electrode tab, in which the recessed groove is defined, is provided so that the recessed groove is disposed between a flat first planar portion and a flat second planar portion.

9. The electrode assembly of claim 2, wherein the negative electrode tab further comprises an outer negative electrode tab disposed father from the center hole than the outer end of the positive electrode.

10. A secondary battery comprising the electrode assembly of claim 1.
